Europäisches Patentamt

European Patent Office

Office européen des brevets

(11) Publication number: 0 302 555
A1

## EUROPEAN PATENT APPLICATION

(21) Application number: 88201599.3

(22) Date of filing: 25.07.88

(51) Int. Cl.⁴: B60R 11/06

(30) Priority: 07.08.87 SE 8703077

(43) Date of publication of application:
08.02.89 Bulletin 89/06

(84) Designated Contracting States:
AT BE CH DE FR GB LI NL

(71) Applicant: Axelson, Gunnar
Mälarbadsvägen 5
S-151 50 Södertälje(SE)

(72) Inventor: Axelson, Gunnar
Mälarbadsvägen 5
S-151 50 Södertälje(SE)

(74) Representative: Rosenquist, Per Olof
P.O. Rosenquist Patentbyra AB Storgatan 35
S-151 36 Södertälje(SE)

(54) Storage system.

(57) The present invention relates to a storage system to be built in into vehicles, trailers and containers, for instance, said system being intended for storing tools, equipment and material, and to means for fitting said system into a commercial vehicle.

The storage system is provided with a frame (1,2) fitting the intended space, elements (4; 9,10) arranged removably in the frame and means (8) provided on said elements for suspending and storing said objects.

The means for fitting the storage system into a commercial vehicle comprises a stand (18), the upper surface thereof forming a support surface for the storage system, and being located on a level with the wheel casing (3) inside the vehicle.

FIG.1

## STORAGE SYSTEM

The present invention relates to a storage system to be built in into vehicles, trailers and containers, for instance, said system being intended for storing tools, equipment and material, and more particularly to a storage system which can be adapted to various applications and can be altered to suit altered demands.

Most types of commercial vehicles are fitted out after manufacture to suit the user's requirements. They are then fitted with drawers, shelves, partitions, boxes etc., for storing tools, tackle, equipment, information material and so on. Protective inner walls are normally fitted initially, girders, wheel casing and other protruding parts thus being covered, against which walls cabinets are fitted, often on a plinth, and onto which panels for hanging various objects are fitted.

The drawbacks of this conventional method are, for instance, that the fittings entail a considerable extra weight and the space is inefficiently utilized where the limiting surface are irregular as is the case in most vehicles. The conventional method also results in an impractical and space-consuming arrangement as well as demanding time-consuming, expensive and laborious work, to name a few of the drawbacks. The cabinets are generally made of steel which, besides being extremely heavy, may entail corrosion problems.

The basic problem is that in most vehicles, the walls, floor and ceiling are irregular in shape, often having protruding parts such as wheel casings. This has previously lead to poor utilization of the available space.

Furthermore, conventionally used cabinets have standard mesurements, giving a storage system which is not easily adapted, and their shape allows little opportunity for volume optimization.

Furthermore, systems available today are unable to deal with bulk goods, theft-prone objects, tools and instruments, e.g. theodolites, specific to a particular customer.

The above drawbacks, combined with the fact that most vehicles have low rooves and that the trend is towards even smaller vehicles, draws additional attention to the problem.

The main object of the present invention is therefor to provide a flexible storage system which can easily be adapted to both the user's requirements and the available space where it is to be fitted; which can be adapted and altered as altered needs arise; which offers optimum utilization of space even in places limited by irregular walls, floors and ceilings.

Another object of the invention is to effect a flexible storage system which is considerably lighter than conventional storage systems and which is economical and rational in manufacture, assembly and use.

These and other aims are achieved with the storage system according to the inventin, which is characterised by a frame fitting the intended space, elements arranged removably in the frame and means provided on said element for suspending/storing said objects.

According to a preferred embodiment of the invention the storage system consists of a frame fitted in the space and having an open front facing towards the space, comprising at least two frame sections opposite and substantially parallel to each other, a rear edge surface fitting the defining wall of the space, and also guide means located in the frame for panel elements displaceable and completely detachable from the frame, as well as suspension/storage means arranged on the panel elements.

Both frame sections and panel elements are prefereably made of plywood.

The guide means are suitably in the form of grooves in the opposite, substantially parallel sections of the frame, allowing the panel elements to be inserted or withdrawn from the frame along these grooves. The substantially parallel sections are suitably arranged horizontally.

The storage system according to the invention entails several advantages and offers many possibilities which could not be realized with previously known storage systems for building in into commercial vehicles, for instance.

Thus, maximum flexibility is obtained in that the panel elements with objects stored thereon can be withdrawn from the grooves and taken to the desired place. The panel elements can be stored complete with equipment for a specific purpose, when they are not being used as part of the equipment in the vehicle. They can of course also be moved from one vehicle to another.

Two or more panel elements may also be joined together to form a cupboard or shelf section, provided with a container for collecting liquids or the like, or with holders for specific tools or instruments. The sections can be treated as separate units, being withdrawn and replaced as desired in the storage system according to the invention. The width of the sections is thus determined by the distance between adjacent grooves or equivalent guides in the frame, this distance being optional, or the width may be multiples of the distance.

Another big advantage is that each panel element has two free surfaces which can be used, thus doubling the storage capacity in comparison with conventional tool panels.

The invention also relates to a means for fitting the storage system in accordance with the invention in a commercial vehicle, consisting of a stand on which the frame of the storage system is placed, the upper surface of the stand being arranged on a level with the upper surface of the wheel casing inside the space to be utilized. The storage system is thus at a suitable working height and the space below can be used for storing bulky equipment such as crowbars and the like.

The stand can be further developed by arranging a support element for the provision of a floor surface, and telescopically extending sections which can be arranged in the stand on both sides of the access opening to the storage space of the vehicle. A working surface can thus be created outside the vehicle, as well as an arrangement for hanging panel elements with equipment arranged thereon.

Additional advantages, features and uses for the invention will be clear from the following more detailed description of preferred embodiments of the invention with reference to the accompanying drawings in which

fig. 1 shows a partial view from the front of one arrangement of the storage system according to the invention,

fig. 2 shows a cross.sectional view taken through the arrangement according to fig. 1, along the line II-II, and

fig. 3 shows another example of an arrangement of the storage system according to the invention.

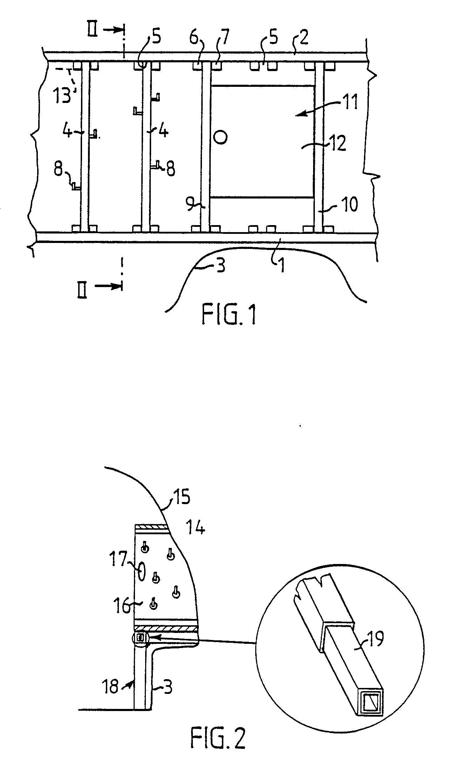

Fig. 1 is a front view of part of one arrangement of the storage system according to the invention. It has two substantially parallel frame sections 1,2, arranged in the storage space in a vehicle, above the wheel casing, indicated by 3. Panel elements 4 are arranged between the two frame sections 1,2 and are displaceable in guiding grooves 5. In the embodiment shown the guides are formed by two parallel strips 6,7 spaced sufficiently from each other for the panel elements to be retained with suf ficient frictional force to prevent them from falling out during transport but allowing the elements to be withdrawn when desired.

The guides 5 can be designed arbitrarily and may, for instance, be in the form of grooves in the frame sections 1,2.

Optional hanging arrangements, indicated at 8, may be arranged on both sides of the panel elements 4. This is one of the essential advantages achieved by means of the invention and entails a doubling of the storage space in comparison with conventional tool panels. The panel elements with equipment can also be removed from the frame and taken to a work place. They can also be moved around as desired, exchanged, and the distance between them can be varied as desired.

As shown in Fig. 1, two or more panel elements 9,10 can be joined to form a unit such as a cabinet or shelf section 11, and this may be provided with a door 12. This offers infinite flexibility since the cabinet or shelf section can be adapted to any desired object.

To further increase security, the panel elements can also be locked in the frame by cotter pins or by locking means, as indicated by a broken line at 13.

Fig. 2 shows a cross-sectional view through the storage system according to Fig. 1, taken along the line II-II. It can be seen here that the rear edge 14 of the side frame sections (not shown) is fitted to the limiting wall 15 of the space, this limiting wall also forming the rear wall of the storage system against which the storage system is assembled. The edge of the panel element facing the limiting wall 15 is suitably also shaped to fit this, thus allowing maximum use to be made of the available space.

As also indicated on the drawing, the panel elements may also be provided with handles, for instance in the form of notches 17 in the panel to facilitate handling.

Making both the panel elements and the frame out of plywood gives a weight saving of at least 30 % in comparison with the use of conventional steel boxes, while still retaining high strength, and also increases the storage capacity many times over. Corrosion problems associated with the use of steel boxes are also eliminated.

The enlarged view in Fig. 2 indicates that the stand 18 on which the storage system according to the present invention is mounted has been equipped with telescopically extending sections 19, thus creating a suspension means for the panel elements with their equipment. If a stand is placed on both sides of the access opening to the storage space of the vehicle, a working surface can at the same time be arranged on the telescopic sections.

It should be emphasized that the invention is in no way limited to use in vehicles. The storage system is suitable for practically all types of storage spaces, although it is deemed that the greatest advantages are to ge gained at present in various types of transport and service vehicles.

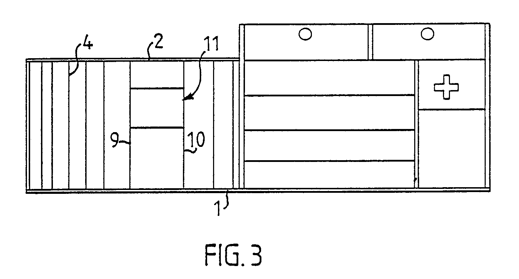

To further illustrate the invention, another arrangement of a storage system according to the inventin is shown schematically in Fig. 3, where the panel elements are combined into pull-out units with various shelf and cupboard sections. The system can be varied as desired and an existing system still offers considerable possibilities for alteration and adapting to altered demands.

## Claims

1. A storage system to be built in into vehicles, trailers and containers, for instance, said system being intended for storing tools, equipment and material, **characterised** by a frame (1,2) fitting the intended space, elements (4; 9,10) arranged removably in the frame and means (8) provided on said elements for suspending/storing said objects.

2. A storage system as claimed in claim 1, **characterised** in that the frame comprises an open front facing towards the space, at least two frame sections (1,2) opposite and substantially parallel to each other, a rear edge surface (14) fitting the defining wall (15) of the space, and also guide means (5) located in the frame for panel elements (4; 9,10) displaceable and detachable from the frame, as well as suspension/storage means (8; 12) arranged on the panel elements.

3. A storage system as claimed in claims 1.2, **characterised** in that both the frame sections (1,2) and the panel elements (4; 9,10) are made of plywood.

4. A storage system as claimed in claims 1-3, **characterised** in that the guide means are in the form of grooves (5) in the opposite, substantially parallel sections (1,2) of the frame.

5. A storage system as claimed in claims 1-4, **characterised** in that two or more panel elements (9,10) are joined together to form cupboard or shelf sections (11) which can be inserted into or removed from the frame as a unit.

6. A means for fitting the storage system in accordance with claim 1 into a commercial vehicle, in the form of a stand (18), **characterised** in that the upper surface of the stand (18), forming a support surface for the storage system, is on a level with the wheel housing (3) inside the vehicle.

7. A means as claimed in claim 6, **characterised** in that the stand (18) is provided with telescopic sections (19) which can be extended through the opening giving access to the storage space of the vehicle.

FIG.1

FIG.2

FIG. 3

| DOCUMENTS CONSIDERED TO BE RELEVANT | | | EP 88201599.3 |
|---|---|---|---|
| Category | Citation of document with indication, where appropriate, of relevant passages | Relevant to claim | CLASSIFICATION OF THE APPLICATION (Int. Cl.4) |
| A | US - A - 4 247 144 (RADEK) <br> * Fig. 3-6 * <br> -- | | B 60 R 11/06 |
| A | US - A - 3 878 633 (MC WILLIAMS) <br> * Fig. * <br> -- | | |
| A | GB - A - 2 166 091 (BRI STOR) <br> * Fig. 1,5 * <br> -- | 6 | |
| A | GB - A - 2 164 610 (LINVAR) <br> * Fig. 1 * <br> -- | 6 | |
| A | US - A - 3 826 529 (WOOD). <br> * Fig. * <br> ---- | | |
| | | | **TECHNICAL FIELDS SEARCHED (Int. Cl.4)** |
| | | | B 60 R |

The present search report has been drawn up for all claims

| Place of search | Date of completion of the search | Examiner |
|---|---|---|
| VIENNA | 10-11-1988 | PANGRATZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82